# EUROPEAN PATENT APPLICATION

(11) **EP 4 608 005 A1**
(43) Date of publication of application: **27.08.2025**
(21) Application number: 23935031.7
(22) Date of filing: 20.11.2023
(51) Int. Cl.: H04W 28/24

(54) **QOS-BASED WORK CHAIN ORCHESTRATION METHOD, APPARATUS, ELECTRONIC DEVICE AND MEDIUM**

(30) Priority: 23.04.2023 CN 202310468617
(71) Applicant: ZTE CORPORATION, Shenzhen, Guangdong 518057 (CN)
(72) Inventor: XUE, Yan, Shenzhen, Guangdong 518057 (CN); XIE, Feng, Shenzhen, Guangdong 518057 (CN)
(74) Representative: Canzler & Bergmeier Patentanwälte Partnerschaft mbB
(86) International application number: PCT/CN2023/132540
(87) International publication number: WO 2024/221863

(57) **Abstract**

Provided in the present disclosure are a quality of service (QoS)-based work chain orchestration method, an apparatus, an electronic device and a computer-readable medium. The work chain orchestration method is applied to a first network element, and comprises: acquiring a QoS demand parameter; on the basis of the acquired QoS demand parameter, generating a project-level QoS index, the project-level QoS index being used for providing an overall service quality guarantee for a business; on the basis of the project-level QoS index, generating a field-level QoS index of a second network element; querying a task list stored in the second network element to acquire a task capable of satisfying the field-level QoS index; and, according to the project-level QoS index, the field-level QoS index and the task list query result, performing work chain orchestration on the acquired task.

## Description

### TECHNICAL FIELD

The present disclosure relates to, but is not limited to, the field of computers and communications, and particularly relates to a Quality of Service (QoS)-based work chain orchestration method and apparatus, an electronic device, and a computer readable medium.

### BACKGROUND

Following the trend of deep integration of Information and Communications Technology (ICT), networks will not merely serve as pipelines for transmitting bits in the future, but also need to have wireless sensing capability, computing power, intelligent service capability, and network security and trusted-transactional capability. In the networks, QoS is generally used to provide service guarantee capability. In the future, the networks will provide integrated services, and the scenario services of the networks may span a plurality of domains such as the domains of communications, sensing, computing power, intelligence, and security and trusted transaction. Since each domain is a space with certain specialization and independence, a corresponding QoS service guarantee needs to take account of the characteristics of all the domains. A conventional 5G QoS mechanism uses QoS profiles to describe QoS features and parameters of a communication domain, but since the services in other domains than the communication domain differ greatly, QoS indexes cannot be shared. Since the 5G QoS cannot be directly used to characterize the services in the other domains, dedicated QoS indexes are proposed for each domain. In view of the fact that the QoS dimensions of each domain cannot be unified, a large number of factors may affect an overall QoS effect when an integrated service is provided through multi-domain cooperation in a network. At present, there is no effective solution to multi-domain integrated service QoS guarantee.

### SUMMARY

In order to solve the problems that the QoS dimensions of each domain cannot be unified, service capability and cooperation are poor, and a QoS integrated service guarantee effect is poor in the related technology, the embodiments of the present disclosure provide a QoS-based work chain orchestration method and apparatus, an electronic device, and a medium.

In a first aspect, an embodiment of the present disclosure provides a QoS-based work chain orchestration method applied to a first network element, including: acquiring a QoS requirement parameter; generating a project-level QoS index based on the acquired QoS requirement parameter, wherein the project-level QoS index is configured to provide an overall QoS guarantee for a service; generating a domain-level QoS index for a second network element based on the project-level QoS index; querying a task list stored in the second network element, and acquiring tasks capable of satisfying the domain-level QoS index; and performing work chain orchestration on the acquired tasks according to the project-level QoS index, the domain-level QoS index, and a task list query result.

In a second aspect, an embodiment of the present disclosure provides a QoS-based work chain orchestration method applied to a second network element, including: receiving a domain-level QoS index and task query information from a first network element; querying a task list of the second network element according to the domain-level QoS index, and selecting tasks capable of satisfying the domain-level QoS index according to task-level QoS information; feeding back a task list query result to the first network element; receiving a work chain orchestration result from the first network element; determining task execution entities according to the work chain orchestration result and the domain-level QoS index; and notifying the task execution entities to execute the tasks according to the work chain orchestration result.

In a third aspect, an embodiment of the present disclosure provides a QoS-based work chain orchestration apparatus located in a first network element, including: a QoS management and control unit configured to generate a project-level QoS index and a domain-level QoS index, and search for tasks according to the project-level QoS index and the domain-level QoS index to perform work chain orchestration on the tasks, wherein the project-level QoS index is configured to provide an overall QoS guarantee for a service, and the domain-level QoS index is generated based on the project-level QoS index.

In a fourth aspect, the present disclosure provides the other QoS-based work chain orchestration apparatus located in a second network element, including: a QoS task query unit configured to perform task information query on a task list stored in the second network element, wherein the task information query includes, but not limited to, at least one of: task name, task-level QoS information, task description information, task identification, or task execution entity; and a QoS task execution unit configured to instruct, according to a task query result, task entities to execute tasks according to a QoS work chain orchestration result.

In a fifth aspect, an embodiment of the present disclosure provides an electronic device, including: one or more processors; and a storage device having one or more programs stored thereon, wherein the electronic device is a first network element or is located in the first network element, and when the one or more programs are executed by the one or more processors, the one or more processors are caused to perform the following operations: acquiring a QoS requirement parameter; generating a project-level QoS index based on the acquired QoS requirement parameter, wherein the project-level QoS index is configured to provide an overall QoS guarantee for a service; generating a domain-level QoS index for a second network element based on the project-level QoS index; querying a task list stored in the second network element, and acquiring tasks capable of satisfying the domain-level QoS index; and performing work chain orchestration on the acquired tasks according to the project-level QoS index, the domain-level QoS index, and a task list query result.

In a sixth aspect, an embodiment of the present disclosure provides an electronic device, including: one or more processors; and a storage device having one or more programs stored thereon, wherein the electronic device is a second network element or is located in the second network element, and when the one or more programs are executed by the one or more processors, the one or more processors are caused to perform the following operations: receiving a domain-level QoS index and task query information from a first network element; querying a task list of the second network element according to the domain-level QoS index, and selecting tasks capable of satisfying the domain-level QoS index according to task-level QoS information; feeding back a task list query result to the first network element; receiving a work chain orchestration result from the first network element; determining task execution entities according to the work chain orchestration result and the domain-level QoS index; and notifying the task execution entities to execute the tasks according to the work chain orchestration result.

In a seventh aspect, an embodiment of the present disclosure provides a computer readable medium, wherein the computer readable medium has stored thereon a computer program which, when executed by a processor, implements the method described in the first aspect or the second aspect.

According to the QoS-based work chain orchestration methods and apparatuses, the electronic devices, and the computer readable medium provided by the present disclosure, a guarantee for multi-domain integrated QoS is implemented by adopting a flow of acquisition of the QoS requirement, generation of the project-level QoS index, generation of the domain-level QoS index, query of the QoS tasks, and QoS work chain orchestration, make full use of the capability of each domain, and provide good overall service experience.

### BRIEF DESCRIPTION OF DRAWINGS

The accompany drawings are intended to provide a further understanding of the present disclosure and constitute a part of the specification. Together with the following specific implementations, the drawings are used to explain the present disclosure, but do not constitute any limitation to the present disclosure. In the drawings:
FIG. 1 is a flowchart illustrating a QoS-based work chain orchestration method according to an embodiment of the present disclosure;
FIG. 2 is a flowchart illustrating exemplary operations of performing work chain orchestration on acquired tasks in the embodiment illustrated by FIG. 1;
FIG. 3 is a flowchart illustrating exemplary operations after performing work chain orchestration on acquired tasks in the embodiment illustrated by FIG. 1;
FIG. 4 is a schematic diagram illustrating exemplary association of a first network element and a second network element according to an embodiment of the present disclosure;
FIG. 5 is a schematic diagram illustrating exemplary association of a first network element, a second network element, and a third network element according to an embodiment of the present disclosure;
FIG. 6 is the other flowchart illustrating a QoS-based work chain orchestration method according to an embodiment of the present disclosure;
FIG. 7 is a block diagram of a work chain orchestration apparatus according to an embodiment of the present disclosure;
FIG. 8 is the other block diagram of a work chain orchestration apparatus according to an embodiment of the present disclosure;
FIG. 9 is a block diagram of an electronic device according to an embodiment of the present disclosure;
FIG. 10 is the other block diagram of an electronic device according to an embodiment of the present disclosure;
FIG. 11 is a block diagram of a computer readable medium according to an embodiment of the present disclosure; and
FIG. 12 is a schematic diagram illustrating QoS-based work chain orchestration and task execution according to Example 1.

### DETAIL DESCRIPTION OF EMBODIMENTS

In order to enable those of ordinary skill in the art to better understand the technical solutions of the present disclosure, exemplary embodiments will be described more fully below with reference to the drawings, but the exemplary embodiments may be specifically embodied in different forms and should not be interpreted as being limited to the embodiments described herein. The embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe the specific exemplary embodiments, and are not intended to limit the subject matter claimed by the present disclosure. As used herein, "a", "one", and "the" which indicate a singular form are intended to include a plural form, unless expressly stated in the context. It should be further understood that the terms "include" and/or "including" used herein indicate the presence of the described features, integers, operations, elements and/or components, but do not exclude the presence or addition of one or more other features, integers, operations, elements, components and/or combinations thereof.

It should be understood that although the terms such as "first" and "second" are used herein to describe various elements, components, regions, layers and/or portions, these elements, components, regions, layers and/or portions are not limited by the terms. The terms are merely used to distinguish one element, component, region, layer or portion from another element, component, region, layer or portion. Therefore, a first element, a first component, a first region, a first node, or a first portion discussed below may be called a second element, a second component, a second region, a second node, or a second portion without departing from the teaching disclosed herein. Further, a first element, a first component, a first region, a first node, or a first portion in one embodiment may be different from a first element, a first component, a first region, a first node, or a first portion in another embodiment.

Unless otherwise defined, all terms (including technical terms and scientific terms) and features used herein have the same meanings as commonly understood by those of ordinary skill in the technical field of the subject matter disclosed herein. It should be further understood that the terms, such as those defined in commonly used dictionaries, should be interpreted as having the meanings that are consistent with the meanings in the context of the related technology, and should not be interpreted in an idealized or overly formal sense unless expressly so defined herein.

It should be further understood that the description of features or aspects in each exemplary embodiment should generally be considered to be applicable to other similar features or aspects in the other exemplary embodiments, unless expressly stated in the context. The embodiments and implementations of the present disclosure and the features therein can be combined with each other if no conflict is incurred.

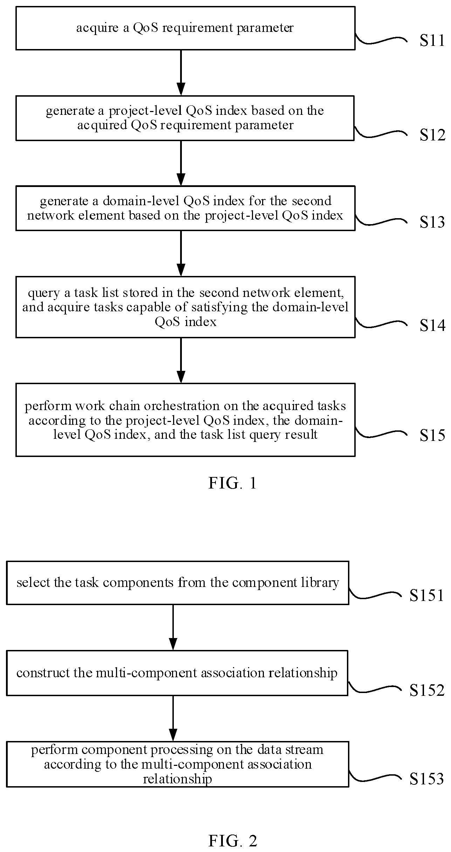

In a first aspect, an embodiment of the present disclosure provides a QoS-based work chain orchestration method. The work chain orchestration method is applied to a first network element, and as shown in FIG. 1, the work chain orchestration method includes the following operations S11 to S15.

At operation S11, a QoS requirement parameter is acquired.

In the embodiment of the present disclosure, the QoS requirement parameter related to a service is acquired by the first network element. The requirement parameter may be used as a reference for formulating a project-level QoS index.

In some alternative implementations, the first network element may include one of: a QoS management and control entity, a QoS management and control layer, a QoS management and control network element, a QoS management and control function, a QoS management and control node, a core network, an access network, a cloud platform, a management orchestrator, a control-plane entity, a user-plane entity, a management-plane entity, a task management and control entity, and a QoS management and control agent. The QoS management and control entity may be a functional entity used for QoS management and control in a network.

When the first network element is the QoS management and control entity, for example, the QoS management and control entity may be a functional entity dedicated to QoS management and control in a network, such as a functional entity corresponding to a cloud platform functional module, a functional entity in a Centralized Unit (CU), or a functional entity in a Distributed Unit (DU). The QoS management and control entity may be located in a certain control network element of a core network, for example, the QoS management and control entity may be located in a Policy Control Function (PCF) network element of the core network or a Session Management Function (SMF) network element of the core network. The QoS management and control entity may also be located in a protocol layer of an access network, such as one of: a Radio Resource Control (RRC) layer, a Service Data Adaptation Protocol (SDAP) layer, a Packet Data Convergence Protocol (PDCP) layer, a Radio Link Control (RLC) layer, a Medium Access Control (MAC) layer, and a physical layer.

In some alternative implementations, the first network element may acquire the QoS requirement parameter from other network elements via interfaces, or may acquire the QoS requirement parameter by self-sensing and analysis, or may acquire the QoS requirement parameter with both of the above two methods.

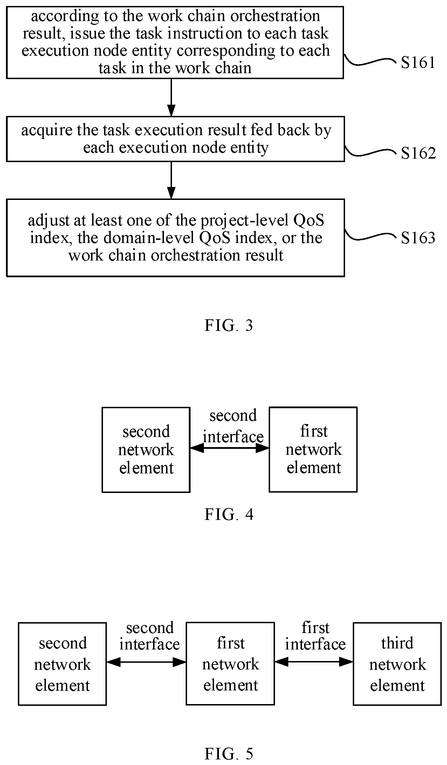

In some alternative implementations, referring to FIG. 5, acquiring the QoS requirement parameter by the first network element may include: acquiring the QoS requirement parameter by the first network element from a third network element via a first interface, which is an interface between the first network element and the third network element. The third network element refers to one or more network elements capable of interacting with the first network element and acquiring the QoS requirement parameter.

In some alternative implementations, acquiring the QoS requirement parameter by the first network element (or the third network element) may include at least one of: generating the QoS requirement parameter by sensing network information; converting network intent into the QoS requirement parameter based on an intent-based network; generating the QoS requirement parameter by performing big data analysis and artificial intelligence (AI) reasoning on network historical data; generating the QoS requirement parameter by sensing a capability of a second network element; and generating the QoS requirement parameter by sensing capabilities of the domains of communications, sensing, computing power, AI, and security.

The network information may include, but is not limited to, at least one of: network state information, service requirement information, user requirement information, network scene information, or network environment information. The second network element refers to one or more network elements that are capable of interacting with the first network element and store task lists in itself (which will be described in detail below).

In some alternative implementations, the QoS requirement parameter may include, but is not limited to, at least one of: bandwidth, data rate, throughput, latency, jitter, priority, accuracy, resolution, computing power, storage capacity, intelligence level, determinism, or reliability.

At operation S12, a project-level QoS index is generated based on the acquired QoS requirement parameter, with the project-level QoS index configured to provide an overall QoS guarantee for a service.

In the embodiment of the present disclosure, the first network element may generate one or more project-level QoS indexes based on the acquired QoS requirement parameter. The project-level QoS index is configured to provide the overall QoS guarantee for the service. In other words, the project-level QoS index is a comprehensive index for the overall service.

For example, in a case where the QoS requirement parameter includes determinism and the QoS determinism requirement parameter takes 1 to 10 to represent an ascending order of determinism, the first network element (e.g., the QoS management and control entity) may generate two project-level QoS indexes, i.e., an ultra-low latency index "max latency=1 microsecond" and an ultra-high reliability index "reliability=99.99999%" based on the QoS determinism requirement parameter of 10.

In some alternative implementations, the first network element may map the acquired QoS requirement parameter to the project-level QoS index by comprehensive analysis.

At operation S13, a domain-level QoS index for the second network element is generated based on the project-level QoS index.

In the embodiment of the present disclosure, the first network element may generate one or more domain-level QoS indexes for the second network element based on the generated project-level QoS index.

In some alternative implementations, according to one classification criterion, the "domain" described in the embodiment of the present disclosure may include, but is not limited to, at least one of: a communication domain, a sensing domain, a computational domain (computing power domain), an intelligent domain (AI domain), or a security domain. According to another classification criterion, the "domain" may include, but is not limited to, at least one of: a core network domain, an access network domain, a transmission network domain, a terminal domain, a wired domain, or a wireless domain. In addition, different classification criteria may be combined if no conflict is incurred, for example, the generated domain-level QoS indexes may include a security-domain QoS index and a wireless-domain QoS index.

In some alternative implementations, generating the domain-level QoS index for the second network element based on the project-level QoS index may include: directly taking the project-level QoS index as a domain-level QoS index of a single domain; or decomposing the project-level QoS index into domain-level QoS indexes of a plurality of domains.

For example, in a case where the project-level QoS index is a project-level data transfer rate, the project-level data transfer rate is directly mapped to a data rate of a communication domain, which belongs to a manner of directly taking one project-level QoS index as a QoS index of a single domain. For example, a project-level QoS determinism index is decomposed into a communication-domain determinism index (e.g., latency, jitter, or time window) and a sensing-domain determinism index (e.g., sensing accuracy, resolution, or positioning accuracy), which belongs to a manner of decomposing one project-level QoS index into QoS indexes of a plurality of domains.

In some alternative implementations, decomposing the project-level QoS index into the domain-level QoS indexes of the plurality of domains may adopt at least one of the following decomposition methods: directly splitting the project-level QoS index according to the domains; decomposing the project-level QoS index using weighting factors for different domains; decomposing the project-level QoS index by performing ergodic optimization on multiple combinations; or decomposing the project-level QoS index with an optimization method using a theoretical formula.

Taking the method of decomposing the project-level QoS index using the weighting factors for the different domains as an example, when the project-level QoS index is decomposed for the plurality of domains, a QoS priority index is further generated for each of the different domains, for example, in a multi-domain fusion scenario dominated by the communication domain, a QoS priority level of the communication domain is higher, and QoS priority levels of the other domains are lower. When the project-level QoS index is decomposed for the plurality of domains, different weighting factors may be used to control QoS index proportions and QoS priority levels of the different domains. A balanced compromise can be made between the domains with the weighting factors. For example, for the AI domain, the longer the model is trained, the higher the accuracy, the larger the AI delay, and in order to ensure a total service delay, a communication-domain delay needs to be reduced, which may restrict normal transmission of communication services. By controlling delay proportions of the AI domain, the communication domain, and the computing power domain with the weighting factors, an optimal solution to service delay can be provided. For example, if the project-level QoS index is that a total service delay requirement is less than 25 ms (millisecond) and an index proportion of an AI-domain delay requirement is higher, the delay requirement may be decomposed as follows: computational-domain delay requirement: 5 ms, AI-domain delay requirement: 10 ms, sensing-domain delay requirement: 5 ms, and communication-domain delay requirement: 5 ms. For example, if the project-level QoS index is that the total service delay requirement is less than 25 ms and the index proportion of the AI-domain delay requirement is lower, the delay requirement may be decomposed as follows: computational-domain delay requirement: 5 ms, AI-domain delay requirement: 5 ms, sensing-domain delay requirement: 5 ms, and communication-domain delay requirement: 10 ms.

At operation S14, a task list stored in the second network element is queried, and tasks capable of satisfying the domain-level QoS index are acquired.

In the embodiment of the present disclosure, the first network element may query the task list stored in the second network element, and acquire in-domain tasks capable of satisfying each domain-level QoS index.

In the embodiment of the present disclosure, the second network element may include at least one of: a domain-level entity, a domain-level network element, a task execution node, a base station, a terminal, a core network, an integrated network element with multi-domain capabilities, an intelligent network element integrating communication capability and computing power, or an intelligent sensing network element integrating communication capability and computing power.

In some alternative implementations, a task list query result may include, but is not limited to, at least one of: task name, task-level QoS information, task description information, task identification, or task execution entity.

In some alternative implementations, the first network element may search the task list stored in the second network element for the suitable tasks according to the domain-level QoS index, and set task-level QoS indexes for the found tasks.

At operation S15, work chain orchestration is performed on the acquired tasks according to the project-level QoS index, the domain-level QoS index, and the task list query result.

In some alternative implementations, performing work chain orchestration on the acquired tasks may include at least one of: determining a timing relationship between the tasks; determining a cooperation mode of the tasks; determining a conflict resolution priority level of each task; determining triggering conditions for initiating and terminating each task; performing full life cycle management on each task; determining a pipeline for task execution; determining that the tasks are subjected to serial execution; determining that the tasks are subjected to parallel execution; or determining that the tasks are subjected to serial-parallel mixed execution.

In some alternative implementations, performing work chain orchestration on the acquired tasks may include at least one of: selecting task components from a component library; constructing a multi-component association relationship; or performing component processing on a data stream according to the multi-component association relationship.

For example, as shown in FIG. 2, performing work chain orchestration on the acquired tasks may include sequentially performing the following operations S151 to S153.

At operation S151, selecting the task components from the component library.

At operation S152, constructing the multi-component association relationship.

At operation S153, performing component processing on the data stream according to the multi-component association relationship.

It should be noted that the above work chain orchestration performed on the acquired tasks is not only applicable to multi-task orchestration cooperation under the guarantee of multi-domain integrated services, but also applicable to multi-task orchestration cooperation of single-domain services.

In some alternative implementations, in a case where the task list query result includes the task-level QoS information, performing work chain orchestration on the acquired tasks may include: selecting components for executing the tasks according to the task-level QoS information, or selecting the components for executing the tasks according to the task-level QoS information and component-level QoS information related to the components. In the latter case of selecting the components for executing the tasks according to the task-level QoS information and the component-level QoS information related to the components, for example, the first network element may select the suitable components according to the task-level QoS information, set component-level QoS indexes for the components, and perform work chain orchestration on the task components based on the component-level QoS indexes.

In some alternative implementations, in a case where the task-level QoS indexes are set for the found tasks, performing work chain orchestration on the acquired tasks may include: performing work chain orchestration on the tasks based on the task-level QoS indexes.

It should be noted that the task-level QoS index refers to a QoS index corresponding to each task selected according to the domain-level QoS index. The component-level QoS index refers to a QoS index corresponding to each suitable component selected for completing task-level QoS in the domain.

It should be noted that different services correspond to different QoS indexes, and QoS of the services cannot be satisfied without provision of network resources. Since the network resources are limited, the resources need to be reasonably allocated according to the QoS indexes, so as to realize full utilization of the network resources and energy conservation and emission reduction. In some alternative implementations, during the work chain orchestration, a tide effect may be used to allocate an earlier timing and a higher priority level to a task with higher real-time performance, and allocate a later timing and a lower priority level to a task with lower real-time performance. An example of dealing with the tide effect through the timing allocation of the tasks is as follows: since there is a shortage of resources in the daytime, it may be ensured by the work chain orchestration that real-time tasks such as voice/video-based tasks and real-time calculations are executed first; and non-real-time tasks such as automatic software updating and AI off-line task training are executed at night when the resources are available.

In some alternative implementations, in order to achieve an integrated QoS index, the work chain orchestration may adopt a multi-task cooperation manner. For example, when an AI task of model training and reasoning is executed, the cooperation of a computing power task is needed. For example, when a sensing task of data acquisition is executed, data needs to be processed and sorted, which also needs a guarantee of the computing power task.

In some alternative implementations, in order to achieve the integrated QoS index, the work chain orchestration for the tasks may adopt a manner of distributed execution of different tasks by a plurality of network elements. The QoS management and control entity issues the tasks to different network elements, and the network elements execute the tasks in sequence according to requirements of a work chain.

According to the QoS-based work chain orchestration method provided in the embodiment of the present disclosure, a guarantee for multi-domain integrated QoS is implemented by adopting a flow of acquisition of the QoS requirement, generation of the project-level QoS index, generation of the domain-level QoS index, query of the QoS tasks, and QoS work chain orchestration, make full use of the capability of each domain, and provide good overall service experience.

In addition, in some alternative implementations, after performing work chain orchestration on the acquired tasks, the first network element may further perform at least one of the following operations: sending a work chain orchestration result to the second network element; issuing, according to the work chain orchestration result, a task instruction to a task execution entity corresponding to each task in the work chain; acquiring a task execution result fed back by the execution entity; adjusting the project-level QoS index; adjusting the domain-level QoS index; or adjusting the work chain orchestration result.

The task execution entity may be a network element executing the task, and includes, but is not limited to, at least one of: a communication control network element, a computing power control network element, a sensing control network element, an AI control network element, or a security control network element.

Further, there may be an interface provided between the first network element (e.g., the QoS management and control entity) and the network element executing the task. Information transmitted from the first network element to the network element executing the task via the interface includes, but is not limited to, at least one of: task ID or resources provided for the task. Information transmitted from the network element executing the task to the first network element via the interface includes, but is not limited to, at least one of: task ID, task execution state, task execution result, or resources occupied for task execution.

For example, as shown in FIG. 3, after the first network element completes the work chain orchestration, the first network element may perform the following operations S161 to S163.

At operation S161, according to the work chain orchestration result, issuing the task instruction to the task execution entity corresponding to each task in the work chain.

At operation S162, acquiring the task execution result fed back by the execution entity.

At operation S163, adjusting at least one of the project-level QoS index, the domain-level QoS index, or the work chain orchestration result.

In this way, the first network element may determine whether the task execution result meets a project QoS target and/or meets a real QoS requirement. According to the evaluation of the effect, the QoS management and control entity adjusts the multi-domain QoS integrated index, the index of each domain, the work chain orchestration manner, and the task component orchestration manner.

It should be noted that operations S161 to S163 may be repeatedly performed as required, so as to obtain a reasonable QoS mechanism scheme through an iterative loop.

In some alternative implementations, after performing work chain orchestration on the acquired tasks, the second network element may further perform at least one of the following operations: receiving the work chain orchestration result from the first network element; according to the work chain orchestration result, issuing a task instruction to a task execution entity corresponding to each task in the work chain; according to the work chain orchestration result, performing component orchestration on the tasks in the work chain; determining task execution entities according to the work chain orchestration result and the domain-level QoS index; notifying the task execution entities to execute the tasks according to the work chain orchestration result; acquiring task execution results fed back by the execution entities; sending the task execution results fed back by the execution entities to the first network element; or receiving an adjusted work chain orchestration result from the first network element.

In other words, the task instruction may be issued to the task execution entity by the first network element or by the second network element as required. Accordingly, the task execution result may be fed back to the first network element directly by the task execution entity, or may be fed back to the first network element by the task execution entity through the second network element.

In some alternative implementations, as shown in FIG. 4 and FIG. 5, the first network element performs information interaction with the second network element via a second interface. The information interaction includes, but is not limited to, at least one of: the first network element sending task query information to the second network element, the first network element acquiring a task query result fed back by the second network element, the first network element issuing a task execution instruction to the second network element, the first network element sending a work chain orchestration result to the second network element, or the first network element acquiring a task execution result fed back by the second network element.

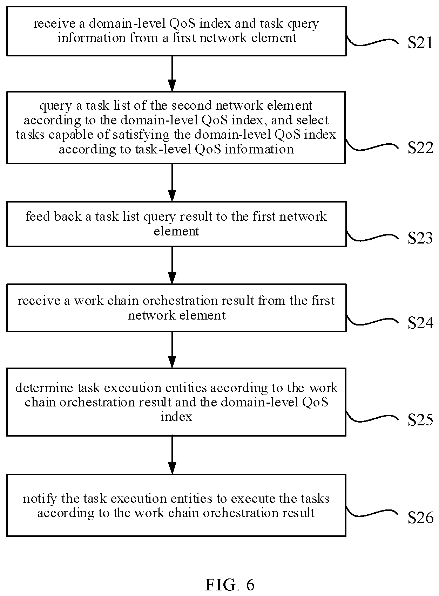

In a second aspect, an embodiment of the present disclosure provides a QoS-based work chain orchestration method. The work chain orchestration method is applied to a second network element, and as shown in FIG. 6, the work chain orchestration method includes the following operations S21 to S26.

At operation S21, a domain-level QoS index and task query information are received from a first network element.

At operation S22, a task list of the second network element is queried according to the domain-level QoS index, and tasks capable of satisfying the domain-level QoS index are selected according to task-level QoS information.

At operation S23, a task list query result is fed back to the first network element.

At operation S24, a work chain orchestration result is received from the first network element.

In some alternative implementations, the work chain orchestration result includes, but is not limited to, at least one of: task name, task number, task-level QoS index, task execution entity, task execution rule, task priority, task cooperation relationship, or component orchestration instruction.

At operation S25, task execution entities are determined according to the work chain orchestration result and the domain-level QoS index.

At operation S26, the task execution entities are notified to execute the tasks according to the work chain orchestration result.

In some alternative implementations, between operation S24 and operation S26, the method may further include: performing component orchestration on the tasks in a work chain according to the work chain orchestration result.

In some alternative implementations, in a case where the work chain orchestration result includes task-level QoS indexes, performing component orchestration on the tasks in the work chain may include: selecting components to perform component orchestration according to the task-level QoS indexes; or selecting the components to perform component orchestration according to the task-level QoS indexes and component-level QoS information related to the components.

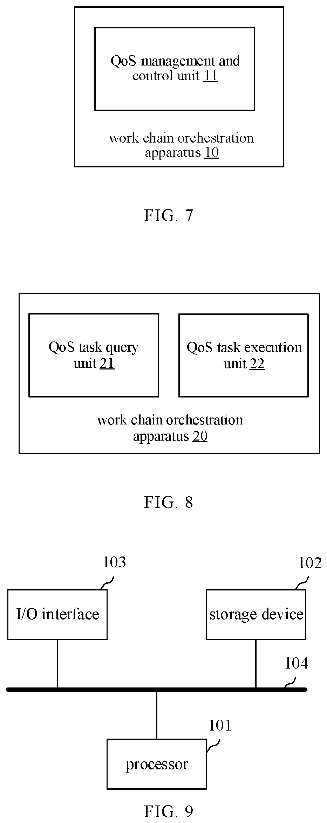

In a third aspect, as shown in FIG. 7, an embodiment of the present disclosure provides a QoS-based work chain orchestration apparatus 10, which is located in a first network element, and includes: a QoS management and control unit 11 configured to generate a project-level QoS index and a domain-level QoS index, and search for tasks according to the project-level QoS index and the domain-level QoS index to perform work chain orchestration on the tasks. The project-level QoS index is configured to provide an overall QoS guarantee for a service, and the domain-level QoS index is generated based on the project-level QoS index.

In some alternative implementations, the QoS management and control unit 11 may be further configured to adjust the project-level QoS index, the domain-level QoS index, and a work chain orchestration result according to task execution results.

In some alternative implementations, the QoS management and control unit 11 may be further configured to sense a QoS requirement, and generate the project-level QoS index based on the sensed QoS requirement.

In some alternative implementations, the QoS management and control unit 11 may be configured to perform one operation or a plurality of operations of the QoS-based work chain orchestration method provided in the first aspect.

In a fourth aspect, as shown in FIG. 8, an embodiment of the present disclosure provides a QoS-based work chain orchestration apparatus 20, which is located in a second network element, and includes a QoS task query unit 21 and a QoS task execution unit 22.

The QoS task query unit 21 is configured to perform task information query on a task list stored in the second network element, and the task information query includes, but is not limited to, at least one of: task name, task-level QoS information, task description information, task identification, or task execution entity.

The QoS task execution unit 22 is configured to instruct, according to a task query result, task entities to execute tasks according to a QoS work chain orchestration result.

In a fifth aspect, referring to FIG. 9, an embodiment of the present disclosure further provides an electronic device, which includes: one or more processors 101; and a storage device 102 having one or more computer programs stored thereon. The electronic device is the aforesaid first network element or is located in the first network element. When the one or more processors 101 execute the one or more programs, the one or more processors 101 are caused to perform the following operations: acquiring a QoS requirement parameter; generating a project-level QoS index based on the acquired QoS requirement parameter, wherein the project-level QoS index is configured to provide an overall QoS guarantee for a service; generating a domain-level QoS index for a second network element based on the project-level QoS index; querying a task list stored in the second network element, and acquiring tasks capable of satisfying the domain-level QoS index; and performing work chain orchestration on the acquired tasks according to the project-level QoS index, the domain-level QoS index, and a task list query result.

The above operations and the concepts related thereto are described in detail in the first aspect, and thus will not be repeated here.

In some alternative implementations, when the one or more processors 101 execute the one or more programs, the one or more processors 101 may implement the QoS-based work chain orchestration method described in the first aspect.

In addition, the electronic device may further include one or more input/output (I/O) interfaces 103, which are connected between the one or more processors 101 and the storage device 102, and configured to enable information interaction between the one or more processors 101 and the storage device 102.

The processor 101 is a device having data processing capability, and includes, but is not limited to, a Central Processing Unit (CPU); the storage device 102 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 103 is connected between the processor 101 and the storage device 102, is capable of enabling the information interaction between the processor 101 and the storage device 102, and includes, but is not limited to, a data bus 104.

In some alternative implementations, the electronic device is the QoS-based work chain orchestration apparatus according to the third aspect.

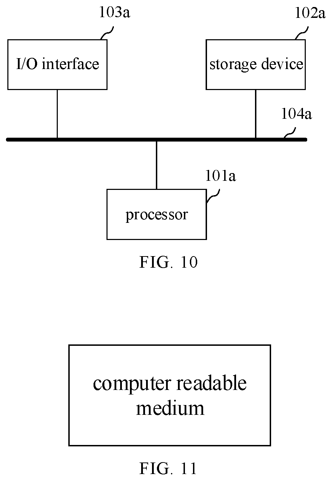

In a sixth aspect, referring to FIG. 10, an embodiment of the present disclosure further provides the other electronic device, which includes: one or more processors 101a; and a storage device 102a having one or more computer programs stored thereon. The electronic device is the aforesaid second network element or is located in the second network element. When the one or more processors 101a execute the one or more programs, the one or more processors 101a are caused to perform the following operations: receiving a domain-level QoS index and task query information from a first network element; querying a task list of the second network element according to the domain-level QoS index, and selecting tasks capable of satisfying the domain-level QoS index according to task-level QoS information; feeding back a task list query result to the first network element; receiving a work chain orchestration result from the first network element; determining task execution entities according to the work chain orchestration result and the domain-level QoS index; and notifying the task execution entities to execute the tasks according to the work chain orchestration result.

The above operations and the concepts related thereto are described in detail in the second aspect, and thus will not be repeated here.

In some alternative implementations, when the one or more processors 101a execute the one or more programs, the one or more processors 101a may implement the QoS-based work chain orchestration method described in the second aspect.

In addition, the electronic device may further include one or more I/O interfaces 103a, which are connected between the one or more processors 101a and the storage device 102a, and configured to enable information interaction between the one or more processors 101a and the storage device 102a.

In some alternative implementations, the electronic device is the QoS-based work chain orchestration apparatus according to the fourth aspect.

In a seventh aspect, referring to FIG. 11, an embodiment of the present disclosure provides a computer readable medium having stored thereon a computer program which, when executed by a processor, may implement any QoS-based work chain orchestration method according to the embodiments of the present disclosure.

In order to clearly illustrate specific implementation processes of the method according to the embodiments of the present disclosure, several examples are listed below for explanation, but the listed examples are not intended to limit the scope of the embodiments of the present disclosure.

### Example 1

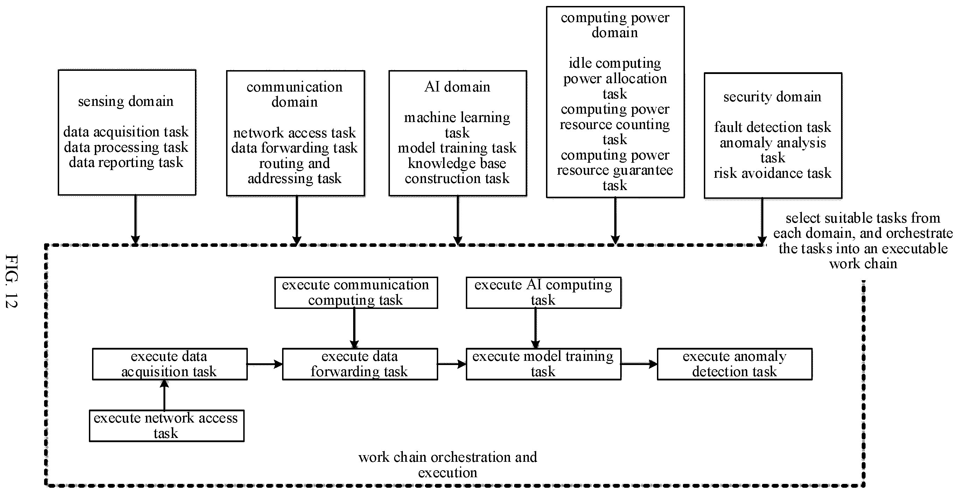

FIG. 12 is a schematic diagram illustrating QoS-based work chain orchestration and task execution according to the present example. In the present example, the first network element is a QoS management and control entity, and the second network elements are domain-level entities of a sensing domain, a communication domain, an AI domain, a computing power domain, and a security domain. Each second network element stores a task list. For example, the second network element of the sensing domain stores a data acquisition task, a data processing task, and a data reporting task; the second network element of the communication domain stores a network access task, a data forwarding task, and a routing and addressing task; the second network element of the AI domain stores a machine learning task, a model training task, and a knowledge base construction task; the second network element of the computing power domain (also called a computational domain) stores an idle computing power allocation task, a computing power resource counting task, and a computing power resource guarantee task; and the second network element of the security domain stores a fault detection task, an anomaly analysis task, and a risk avoidance task. Further, there is an interface provided between the first network element and each second network element, and the interface is configured to acquire QoS requirements, convert into QoS indexes, and perform requirement feedback and negotiation.

After acquiring a QoS requirement parameter and generating a project-level QoS index (also called a multi-domain QoS comprehensive index) based on the acquired QoS requirement parameter, the QoS management and control entity decomposes the project-level QoS index into domain-level QoS indexes of the sensing domain, the communication domain, the AI domain, the computing power domain, and the security domain according to capability information of services or tasks of each domain. Optionally, the capability information of each domain is configured before the QoS management and control entity decomposes the index. Optionally, each domain reports the capability information thereof to the QoS management and control entity before the QoS management and control entity decomposes the index.

Then, the QoS management and control entity selects suitable tasks from each domain through query of the task list of each domain, and orchestrates the tasks into an executable work chain (FIG. 12 shows a work chain orchestrated in such a way that the tasks are subjected to serial-parallel mixed execution).

### Example 2

The present example illustrates enhancement of QoS determinism in an industrial internet scenario achieved with the QoS-based work chain orchestration method according to the embodiments of the present disclosure.

Services in the industrial internet relate to a plurality of domains such as a communication domain, a sensing domain, a computing power domain, and an intelligent (AI) domain. Typical QoS indexes corresponding to determinism of the services are embodied in the five aspects of latency, jitter, packet loss rate, bandwidth, and reliability. Based on the QoS work chain orchestration, capabilities of all the domains may be integrated and considered as a whole to guarantee high determinism.

In the present example, for example, the first network element is a QoS management and control entity, and the second network element is an intelligent sensing network element integrating communication capability and computing power.

After a service request is initiated in the industrial internet scenario, the first network element and the second network element cooperate to perform the following operations 1 to 4 of QoS-based work chain orchestration.

Operation 1: acquiring a QoS requirement parameter, and converting the QoS requirement into a QoS determinism comprehensive (overall) index used as a project-level QoS index.

Specifically, the QoS management and control entity generates the QoS determinism comprehensive index according to the requirement acquired from a physical network of the industrial internet. For example, the QoS requirement parameter is that high determinism is maintained during a certain time period, and the QoS overall index converted from the high determinism requirement is: a total service delay requirement is less than 25 ms, a bandwidth is at least 10 MHz, and a packet loss rate is less than 0.1%.

Operation 2: decomposing the QoS determinism comprehensive index into domain-level QoS indexes.

According to the capability of each domain, the QoS management and control entity decomposes the QoS determinism comprehensive index into a sensing-domain determinism index, a communication-domain determinism index, a computer power-domain determinism index, and an AI-domain determinism index. For example, in order to satisfy the total delay requirement being less than 25 ms according to the comprehensive index, the delay is decomposed into a computational-domain delay of 5 ms, an AI-domain delay of 10 ms, a sensing-domain delay of 5 ms, and a communication-domain delay of 5 ms, that is, the total delay is 5+10+5+5=25 ms. For example, the packet loss rate is equivalent to a packet loss rate of data transmission in the communication domain, and the bandwidth index is equivalent to a spectrum resource bandwidth in the communication domain.

### Operation 3: performing query of determinism tasks.

According to the determinism index of each domain, the QoS management and control entity performs query of in-domain determinism tasks. For example, the tasks of the sensing domain are: environmental data acquisition with sensors and wireless sensing of Automated Guided Vehicle (AGV) position information. The tasks of the communication domain are: network topology planning, data-forwarding quality guarantee, information synchronization, optimal routing selection, and so on. The tasks of the security domain are: fault detection and anomaly detection analysis, anomaly modeling, risk avoidance, and so on. The tasks of the AI domain are: mapping to big data analysis, AI model training reasoning, knowledge map management, and so on. The tasks of the computing power domain are: idle computing power allocation, computing power storage, and computing power resource guarantee. In order to meet the high determinism of the time period and the delay of each domain at operation 2, the routing optimization and data forwarding task of the communication domain, the idle computing power search and scheduling task of the computing power domain, the sensor-based data acquisition task of the sensing domain, and the AI model training reasoning task of the AI domain are determined through the query of the tasks of each domain. The routing optimization and data forwarding task of the communication domain ensures low delay, low jitter, and extremely low packet loss rate of data transmission. The idle computing power search and scheduling task of the computing power domain can search for a hardware device meeting computing and storage requirements, and ensure the provision of computing power in the specified time period. The sensor-based data acquisition task of the sensing domain can enable the network to acquire enough data samples in time. The AI model training reasoning task of the AI domain provides an intelligent service with a delay constraint, and avoids a case where determinism is reduced due to overlong training time.

### Operation 4: performing work chain orchestration.

After finding the tasks meeting the domain-level indexes, the QoS management and control entity performs work chain orchestration on the found tasks according to the QoS determinism comprehensive index. For example, the sensing task of sensor-based data acquisition is executed first, communication data is then forwarded, and an AI model is then trained. For example, the sensing task of sensor-based data acquisition is executed first, computing power resources are then allocated, and then the communication data is forwarded and the AI model is trained.

Through the decomposition of the determinism index and the selection and orchestration of the tasks of each domain, the QoS framework mechanism can maximize the capability thereof to obtain the optimal solution to determinism.

### Example 3

The present example introduces and describes cooperative sensing, cooperative communication, and intelligent allocation of computing power in a multi-hop scenario which are implemented with the QoS-based work chain orchestration method according to the embodiments of the present disclosure.

Cooperative sensing, cooperative communication, and intelligent allocation of computing power are needed in multi-hop scenarios such as Integrated Access and Backhaul (IAB) and Device to Device (D2D).

With the QoS-based work chain orchestration method according to the embodiments of the present disclosure, a QoS management and control entity is used as the first network element, and may acquire information such as a topological relationship between network elements and QoS requirements according to physical network data and requirements; during work chain orchestration, the QoS management and control entity may perform routing selection, selection of task execution network elements, and determination of task execution timing with the topological relationship between network elements, the QoS requirements, and QoS indexes considered comprehensively. For example, according to the topological relationship between network elements, the QoS requirements, and the QoS indexes, the QoS management and control entity determines a location of a sensor executing a sensing task, determines through which communication node sensing data is forwarded, and determines when to provide a computing power guarantee, so as to formulate reasonable tasks and task relationships to form a work chain.

It should be understood by those of ordinary skill in the art that the functional modules/units in all or some of the operations, systems and devices disclosed above may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A Quality of Service-based work chain orchestration method applied to a first network element, comprising:
acquiring a Quality of Service requirement parameter;
generating a project-level Quality of Service index based on the acquired Quality of Service requirement parameter, wherein the project-level Quality of Service index is configured to provide an overall Quality of Service guarantee for a service;
generating a domain-level Quality of Service index for a second network element based on the project-level Quality of Service index;
querying a task list stored in the second network element, and acquiring tasks capable of satisfying the domain-level Quality of Service index; and
performing work chain orchestration on the acquired tasks according to the project-level Quality of Service index, the domain-level Quality of Service index, and a task list query result.

2. The method of claim 1, wherein a domain comprises at least one of:
a communication domain, a sensing domain, a computational domain, an intelligent domain, or a security domain.

3. The method of claim 1, wherein a domain comprises at least one of:
a core network domain, an access network domain, a transmission network domain, a terminal domain, a wired domain, or a wireless domain.

4. The method of claim 1, wherein performing work chain orchestration on the acquired tasks comprises at least one of:
determining a timing relationship between the tasks;
determining a cooperation mode of the tasks;
determining a conflict resolution priority level of each task;
determining triggering conditions for initiating and terminating each task;
performing full life cycle management on each task;
determining a pipeline for task execution;
determining that the tasks are subjected to serial execution;
determining that the tasks are subjected to parallel execution; or
determining that the tasks are subjected to serial-parallel mixed execution.

5. The method of claim 1, wherein the task list query result comprises at least one of: task name, task-level Quality of Service information, task description information, task identification, or task execution entity.

6. The method of claim 5, wherein in a case where the task list query result comprises the task-level Quality of Service information, performing work chain orchestration on the acquired tasks further comprises:
selecting components for executing the tasks according to the task-level Quality of Service information, or
selecting the components for executing the tasks according to the task-level Quality of Service information and component-level Quality of Service information related to the components.

7. The method of any one of claims 1 to 6, wherein after performing work chain orchestration on the acquired tasks, the first network element further performs at least one of the following operations:
sending a work chain orchestration result to the second network element;
issuing, according to the work chain orchestration result, a task instruction to a task execution entity corresponding to each task in a work chain;
acquiring a task execution result fed back by the execution entity;
adjusting the project-level Quality of Service index;
adjusting the domain-level Quality of Service index; or
adjusting the work chain orchestration result.

8. The method of any one of claims 1 to 6, wherein
acquiring the Quality of Service requirement parameter comprises at least one of:
generating the Quality of Service requirement parameter by sensing network information, wherein the network information comprises at least one of: network state information, service requirement information, user requirement information, network scene information, or network environment information;
converting network intent into the Quality of Service requirement parameter based on an intent-based network;
generating the Quality of Service requirement parameter by performing big data analysis and artificial intelligence reasoning on network historical data; or
generating the Quality of Service requirement parameter by sensing a capability of the second network element.

9. The method of any one of claims 1 to 6, wherein
generating the domain-level Quality of Service index for the second network element based on the project-level Quality of Service index comprises:
directly taking the project-level Quality of Service index as the domain-level Quality of Service index of a single domain; or
decomposing the project-level Quality of Service index into the domain-level Quality of Service indexes of a plurality of domains.

10. The method of claim 9, wherein
decomposing the project-level Quality of Service index into the domain-level Quality of Service indexes of the plurality of domains adopts at least one of the following decomposition methods:
directly splitting the project-level Quality of Service index according to the domains;
decomposing the project-level Quality of Service index using weighting factors for different domains;
decomposing the project-level Quality of Service index by performing ergodic optimization on multiple combinations; or
decomposing the project-level Quality of Service index with an optimization method using a theoretical formula.

11. The method of any one of claims 1 to 6, wherein
performing work chain orchestration on the acquired tasks comprises at least one of:
selecting task components from a component library;
constructing a multi-component association relationship; or
performing component processing on a data stream according to the multi-component association relationship.

12. The method of any one of claims 1 to 6, wherein the first network element comprises one of:
a Quality of Service management and control entity, a Quality of Service management and control layer, a Quality of Service management and control network element, a Quality of Service management and control function, a Quality of Service management and control node, a core network, an access network, a cloud platform, a management orchestrator, a control-plane entity, a user-plane entity, a management-plane entity, a task management and control entity, and a Quality of Service management and control agent.

13. The method of any one of claims 1 to 6, wherein the second network element comprises at least one of:
a domain-level entity, a domain-level network element, a task execution node, a base station, a terminal, a core network, an integrated network element with multi-domain capabilities, an intelligent network element integrating communication capability and computing power, or an intelligent sensing network element integrating communication capability and computing power.

14. The method of any one of claims 1 to 6, wherein the first network element acquires the Quality of Service requirement parameter via a first interface, and the first interface is an interface between the first network element and a third network element.

15. The method of any one of claims 1 to 6, wherein the first network element performs information interaction with the second network element via a second interface, and the information interaction comprises at least one of:
the first network element sending task query information to the second network element; the first network element acquiring a task query result fed back by the second network element; the first network element issuing a task execution instruction to the second network element; the first network element sending a work chain orchestration result to the second network element; or the first network element acquiring a task execution result fed back by the second network element.

16. A Quality of Service-based work chain orchestration method applied to a second network element, comprising:
receiving a domain-level Quality of Service index and task query information from a first network element;
querying a task list of the second network element according to the domain-level Quality of Service index, and selecting tasks capable of satisfying the domain-level Quality of Service index according to task-level Quality of Service information;
feeding back a task list query result to the first network element;
receiving a work chain orchestration result from the first network element;
determining task execution entities according to the work chain orchestration result and the domain-level Quality of Service index; and
notifying the task execution entities to execute the tasks according to the work chain orchestration result.

17. The method of claim 16, wherein
the work chain orchestration result comprises at least one of:
task name, task number, task-level Quality of Service index, task execution entity, task execution rule, task priority, task cooperation relationship, or component orchestration instruction.

18. The method of claim 17, further comprising,
performing component orchestration on the tasks in a work chain according to the work chain orchestration result,
wherein performing component orchestration on the tasks in the work chain comprises:
selecting components to perform component orchestration according to task-level Quality of Service indexes; or
selecting the components to perform component orchestration according to the task-level Quality of Service indexes and component-level Quality of Service information related to the components.

19. A Quality of Service-based work chain orchestration apparatus located in a first network element, comprising:
a Quality of Service management and control unit configured to generate a project-level Quality of Service index and a domain-level Quality of Service index, and search for tasks according to the project-level Quality of Service index and the domain-level Quality of Service index to perform work chain orchestration on the tasks,
wherein the project-level Quality of Service index is configured to provide an overall Quality of Service guarantee for a service, and the domain-level Quality of Service index is generated based on the project-level Quality of Service index.

20. A Quality of Service-based work chain orchestration apparatus located in a second network element, comprising:
a Quality of Service task query unit configured to perform task information query on a task list stored in the second network element, wherein the task information query comprises at least one of: task name, task-level Quality of Service information, task description information, task identification, or task execution entity; and
a Quality of Service task execution unit configured to instruct, according to a task query result, task entities to execute tasks according to a Quality of Service work chain orchestration result.

21. An electronic device, comprising:
one or more processors; and
a storage device having one or more programs stored thereon,
wherein the electronic device is a first network element or is located in the first network element, and
when the one or more programs are executed by the one or more processors, the one or more processors are caused to perform the following operations:
acquiring a Quality of Service requirement parameter;
generating a project-level Quality of Service index based on the acquired Quality of Service requirement parameter, wherein the project-level Quality of Service index is configured to provide an overall Quality of Service guarantee for a service;
generating a domain-level Quality of Service index for a second network element based on the project-level Quality of Service index;
querying a task list stored in the second network element, and acquiring tasks capable of satisfying the domain-level Quality of Service index; and
performing work chain orchestration on the acquired tasks according to the project-level Quality of Service index, the domain-level Quality of Service index, and a task list query result.

22. The electronic device of claim 21, wherein
when the one or more programs are executed by the one or more processors, the one or more processors are further caused to perform at least one of the following operations:
sending a work chain orchestration result to the second network element;
issuing, according to the work chain orchestration result, a task instruction to a task execution entity corresponding to each task in a work chain;
acquiring a task execution result fed back by the execution entity;
adjusting the project-level Quality of Service index;
adjusting the domain-level Quality of Service index; or
adjusting the work chain orchestration result.

23. The electronic device of claim 21 or 22, wherein
a domain comprises at least one of: a communication domain, a sensing domain, a computational domain, an intelligent domain, or a security domain;
the first network element comprises one of: a Quality of Service management and control entity, a Quality of Service management and control layer, a Quality of Service management and control network element, a Quality of Service management and control function, a Quality of Service management and control node, a core network, an access network, a cloud platform, a management orchestrator, a control-plane entity, a user-plane entity, a management-plane entity, a task management and control entity, and a Quality of Service management and control agent;
the second network element comprises at least one of: a domain-level entity, a domain-level network element, a task execution node, a base station, a terminal, a core network, an integrated network element with multi-domain capabilities, an intelligent network element integrating communication capability and computing power, or an intelligent sensing network element integrating communication capability and computing power; and
the task list query result comprises at least one of: task name, task-level Quality of Service information, task description information, task identification, or task execution entity.

24. An electronic device, comprising:
one or more processors; and
a storage device having one or more programs stored thereon,
wherein the electronic device is a second network element or is located in the second network element, and
when the one or more programs are executed by the one or more processors, the one or more processors are caused to perform the following operations:
receiving a domain-level Quality of Service index and task query information from a first network element;
querying a task list of the second network element according to the domain-level Quality of Service index, and selecting tasks capable of satisfying the domain-level Quality of Service index according to task-level Quality of Service information;
feeding back a task list query result to the first network element;
receiving a work chain orchestration result from the first network element;
determining task execution entities according to the work chain orchestration result and the domain-level Quality of Service index; and
notifying the task execution entities to execute the tasks according to the work chain orchestration result.

25. A computer readable medium having stored thereon a computer program which, when executed by a processor, implements the method of any one of claims 1 to 18.
